# EUROPEAN PATENT SPECIFICATION

(11) **EP 0 904 966 B1**
(45) Date of publication and mention of the grant of the patent: **10.03.2004**
(21) Application number: 98118149.8
(22) Date of filing: 24.09.1998
(51) Int. Cl.: B60J 7/12, B60J 1/14, E05F 11/52

(54) **A window-operating device for a motor vehicle, in particular for a convertible motor vehicle**
Fensterbetätigungsvorrichtung für ein Kraftfahrzeug, insbesondere für ein Cabriolet-Fahrzeug
Dispositif de manoeuvre pour un véhicule automobile, en particulier pour une voiture cabriolet

(30) Priority: 30.09.1997 IT TO970863
(43) Date of publication of application: 31.03.1999
(73) Proprietor: FIAT AUTO S.p.A., 10135 Torino (IT)
(72) Inventor: Levorin, Mauro, 10142 Torino (IT); Mottino, Claudio, 10100 Torino (IT)
(74) Representative: Franzolin, Luigi

(56) References cited:
- EP-A- 0 385 197
- FR-A- 1 382 296
- US-A- 3 273 285
- US-A- 5 685 596

## Description

The present invention concerns a window-operating device for a fixed or movable portion of a side of a motor vehicle, in particular, for a side of a convertible motor vehicle.

The term "side" is used in the present description and the claims in its broadest sense in order to indicate any element of the vehicle body laterally delimiting the motor vehicle and having an associated window. The aforesaid term therefore includes both the fixed elements of the vehicle body, for example, the fixed rear portions of the sides of the motor vehicles, as well as the movable side doors of the motor vehicles themselves, to which reference will be made below without loss of generality thereby.

As is known, the sides of convertible motor vehicles have at least one box-like body defining a space for accommodating an associated window which can be moved between a lowered, or open, position in which it is located completely inside the space in the box-like body, and a raised, or closed, position in which it projects upwards from the box-like body. These sides generally have at least one window-operating device of the guide and slide type, generally including a pair of shoes connected to the window close to its lower edges and slidingly engaging associated vertical guides housed within the box-like body of the side, and a lever mechanism controlled manually or by means of an electric motor, which co-operates with a lower edge of the window in order to move the window itself along the aforesaid guides between the lowered and raised positions.

In the field of convertible motor vehicles, it is common for them to have windows having curved profiles that are more or less accentuated in order significantly to improve their aesthetic shape and visual impact. However, this leads to the necessity of making substantial modifications to the structure and shape of the inner shell of conventional motor vehicles, with significantly raised costs. In fact, utilising the conventional guide and slide devices for moving the windows of the aforesaid type makes it necessary to provide a specific curvature, both in the outer body of the sides intended to accommodate these windows in the lowered position, as well as in the inner shell of the motor vehicle.

In addition, using the aforesaid guide and slide devices for the vertical movement of windows having particularly marked arcuate profiles would give rise to a significant increase in the transverse size of the corresponding sides and, therefore, of the motor vehicle.

An example of the above described window-operating device for convertible motor vehicles is disclosed in US-A-3273285. In particular, such type of device essentially comprises a mounting frame member attached firmly to the window panel and movable with respect to the box-like body of the side of the vehicle under the driving of an operating mechanism. The mounting frame member has one end linked to the box-like body of the side through an hinge so as it can rotate about an axis transverse to the side of the motor vehicle between a lowered position, in which the window panel is located completely within the box-like body, and a raised position, in which the window panel projects upwards from the box-like body. The other end of the mounting frame member is guided by a curvilinear track member attached firmly to the box-like body of the motor vehicle side.

The above described prior art seems to be affected by the problem of how to provide an improved window-operating device, which permits to move arcuate window panels without using guiding means having specific curved profiles complicating the design of the inner structure of the sides of motor vehicles.

FR-A-1382296 discloses a system for moving a hood, and not a window panel, of a motor vehicle between lowered and raised positions; such hood is attached on the external face of the box-like body of the sides of the motor vehicle. FR-A-1382296 is addressed to the problem of avoiding that, in its lowered position, the hood of a motor vehicle be too tightened, with risks of damages, between the upper edge of the body shell of each side and the relative portion of the bow supporting the hood.

Therefore, US-A-3273285 and FR-A-1382296 refer to the movement of different parts of the vehicle (the window panel and the hood) and are affected by completely different technical problems.

The object of the present invention as defined in claim 1 is to produce a window operating device for a motor vehicle, in particular, for a convertible motor vehicle, which enables the disadvantages related to the use of the arcuate windows mentioned above to be overcome in a simple and economic way.

Further embodiments of the invention are referred to in the dependent claims.

For a better understanding of the present invention a preferred embodiment is now described, purely by way of non-limitative example and with reference to the accompanying drawings, in which:
Figure 1 is a perspective view of a window-operating device for a convertible motor vehicle, produced according to the present invention and disposed in a first operative position;
Figure 2 is a perspective view of the device of Figure 1 mounted in a related side of the motor vehicle and located in a second operative position;
Figure 3 is a perspective view on an enlarged scale of the device of Figure 1, with parts removed for clarity; and
Figure 4 is an exploded perspective view of the device of Figure 3.

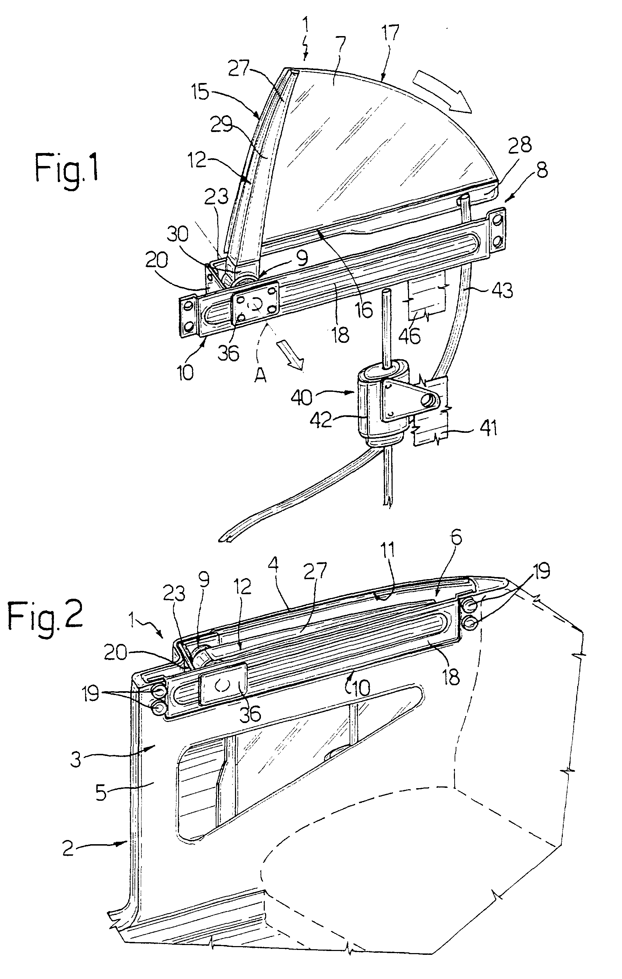

With reference to the accompanying drawings, the reference numeral 1 generally indicates a window-operating device for a fixed or movable portion of a side 2 (Figure 2) of a convertible motor vehicle (not shown), in the example, for a door of the motor vehicle itself.

The side 2 comprises a box-like body 3 constituted by an outer body element 4 and an inner covering panel 5, and defines a space 6 for accommodating a related window 7 moved by the device 1.

According to the present invention, the device 1 essentially comprises a support frame 8 carrying the window 7 and attached, in use, to the body 3 of the side 2, and a male and female screw assembly 9 interposed between the window 7 and the frame 8, which enables the window 7 to move, in use, between a lowered, or open, position (Figure 2) in which it is completely housed in the space 6 in the body 3, and a raised, or closed, position (Figures 1, 3 and 4) in which the window 7 projects upwards from the body 3 itself; in particular, the assembly 9 enables the window 7 to turn, in use, about an axis A transverse to the body element 4 and the panel 5 of the side 2, between the lowered and raised positions, and causes the window 7 to translate along the axis A itself during this turning movement.

The frame 8 includes an attachment assembly 10 firmly fixed to the body 3 of the side 2 at an upper opening 11 in the body 3 itself, and a support element 12 fixed peripherally to the window 7 and movably attached to the attachment assembly 10 by male and female screw assembly 9.

The window 7 is substantially triangular in shape and is laterally delimited by two edges 15, 16, substantially at right angles to each other, and by a curved edge 17 which connects the respective free ends of the edges 15, 16 themselves, and which is outwardly convex; in use, when the window 7 is in the raised position, the edge 15 extends vertically out of the body 3 and the edge 16 extends horizontally along the opening 11 while, when the window 7 is in the lowered position, the edge 15 extends horizontally along the opening 11 and the edge 16 extends vertically within the space 6 within the body 3 itself.

The attachment assembly 10 includes a substantially flat, elongate plate 18 fixed by screws 19 at its end to an upper portion of the panel 5 of the body 3 in correspondence with the opening 11 and which extends, in use, at right angles to the axis A.

The plate 18 has an integral flat element 20 which projects at right angles from an end portion and extends, in use, towards the body element 4 of the body 3; the attachment assembly 10 further includes an L-shape bracket 23 with a first flat portion 24 at right angles to the plate 18 and releasably attached to the element 20 by means of associated screws 25, and a second flat portion 26 facing the plate 18 and disposed, in use, against an inner face of the body element 4.

The support element 12 is substantially L-shape and includes first and second arms 27, 28, substantially at right angles to each other and fixed to the respective edges 15, 16 of the window 7. In particular, the arm 28 projects from the arm 27 and subdivides the arm 27 itself into a main portion 29 firmly attached to the edge 15 of the window 7, and an end portion 30 terminating in an internally threaded cylindrical tubular element which is, in use, coaxial with the axis A and defines a nut 31 of the screw assembly 9.

The assembly 9 further includes a screw 32 with an axis A supported firmly between the plate 18 and the portion 26 of the rod 27 which coaxially engages the nut 31.

According to an important characteristic of the device 1, when the window 7 is in the lowered position, the arm 27 of the support element 12 is disposed horizontally within the opening 11 so that, together with associated seals (not shown) of the window 7, it closes the opening 11 itself and, therefore, the space 6 in the body 3.

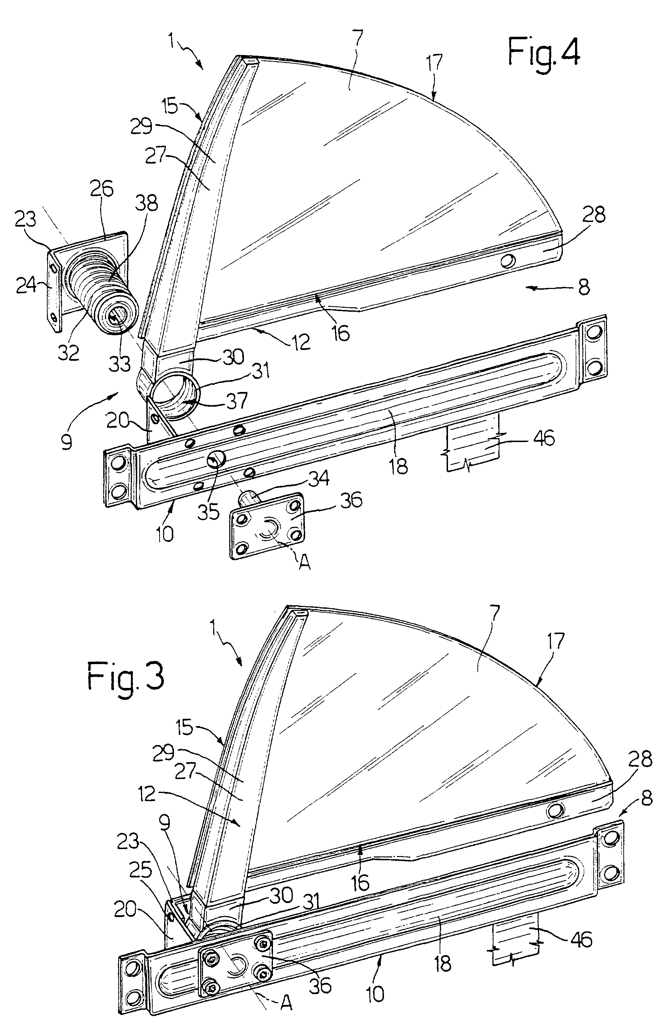

With particular reference to Figure 4, the screw 32 projects fully from the portion 26 of the rod 23, and has an axial blind hole 33 engaged, in use, by a centring pin 34 located so that it passes through a hole 35 in the plate 18 and projects completely from a plate 36 fixed by screws to a face of the plate 18 facing the interior of the motor vehicle.

Finally, the nut 31 and screw 32 have respective threads 37, 38 inclined with respect to the axis A in such a way that as the window 7 turns from the raised position to the lowered position, it translates along the axis A towards the interior of the motor vehicle.

With reference to Figure 1, the device 1 finally includes an electric drive unit 40 (known and therefore not described in detail) co-operating with the assembly 9 in order to move the window 7 between the lowered and raised positions.

The drive unit 40 is of the kind having a movable cable and essentially includes a support body 41, an electric motor 42 carried by the body 41 and an output cable 43 axially moved by the electric motor 42 and attached to a free end portion of the arm 28.

Preferably, the body 41 is fixed to a rod 46 projecting from the plate 18 in such a way that the drive unit 40, the frame 8, the window 7 and the male and female screw assembly 9 together define a unit which can be pre-assembled and mounted in the body 3 of the side 2.

From an examination of the characteristics of the device 1 formed according to the present invention, the advantages conferred thereby are clear.

In particular, the male and female screw assembly 9 enables the associated window 7 to turn about the axis A from the raised position to the lowered position and vice versa, with a contemporaneous translation of the window 7 itself along the axis A towards the interior of the motor vehicle and vice versa. Therefore, by virtue of this movement, the curved profile of the window 7 does not interfere with the structure or shape of the internal shell of the motor vehicle, which cannot have specific curvature; this means that it is possible, without a related increase in costs, to utilise a large variety of windows having a curvilinear shape, and, in particular, cylindrical windows. This system of movement also enables the transverse sizes of the related motor vehicles provided with windows having particularly accentuated arcuate profiles to be limited.

In addition, the combined turning and translation movement caused by the screw assembly 9 facilitates the movement of the window between the lowered and raised positions, in that any sliding between the window 7 itself and the associated seals on the side 2 is reduced to a minimum.

Preferably, the frame 8, the window 7, the screw assembly 9 and the drive unit 40 define an assembly that can be pre-assembled, enabling operations for mounting the device 1 on the side 2 to be significantly simpler than those for mounting conventional window-operating devices.

Finally, according to a secondary characteristic of the present invention, the arm 27 of the support element 12 is shaped so that, together with the seals for the window 7, the space 6 in the side is closed when the window 7 itself is in the lowered position.

Finally, it is clear that modifications and variations can be introduced to the device 1 which do not depart from the ambit of protection of the present invention as defined by the claims.

In particular, the support body 41 of the drive unit 40 could be fixed directly to the box-like body 3 of the side 2.

In addition, the electric drive unit 40 could be replaced by a manual drive unit comprising a control handle on the panel 5 of the side 2, and a transmission unit for the motor interposed between the handle itself and the arm 28 of the support element 12.

## Claims

1. A window-operating device (1) for a side (2) of a motor vehicle, in particular for a side of a convertible motor vehicle, the said side (2) including at least one box-like body (3) defining a space (6) for accommodating an associated window (7), the said device (1) including support means (8) attached to the said box-like body (3) of the said side (2), means (9) for the attachment of the said window (7) for turning movement with the said support means (8) to enable the window (7) to turn, in use, about an axis (A) transverse to the said side (2) between a lowered position, in which the said window (7) is located completely within the said space (6) in the said box-like body (3), and a raised position, in which the said window (7) projects upwards from the said box-like body (3), and transmission means (37, 38) for causing the translation of the said window (7) along the said axis (A) during the turning of the window (7) between the said lowered and raised positions, **characterised in that** the said support means (8) include fixing means (10) attached firmly to the said box-like body (3), and **in that** the said attachment means (9) and the said transmission means (37, 38) include a male and female screw assembly (9) interposed between the said fixing means (10) and the said window (7).

2. A device according to Claim 1, **characterised in that** it includes drive means (40) co-operating with the attachment means (31, 32) and the said transmission means (37, 38) in order to move the said window (7) between the said raised and lowered positions, and **in that** the said support means (8), the said window (7), the said attachment means (9), the said transmission means (37, 38) and the said drive means (40) define a unit which can be pre-assembled and mounted on the said side (2).

3. A device according to Claim 1 or 2, **characterised in that** the said male and female screw assembly (9) includes a screw (32) coaxial to the said axis (A), in use, and attached to one of the said window (7) and the said fixing means (10), and a nut (31) engaged by the said screw (32) and carried by the other of the said window (7) and said fixing means (10).

4. A device according to Claim 3, **characterised in that** the said screw (32) and the said nut (31) have associated threads (38, 37) inclined with respect to the said axis (A) in such a way as to cause the window, during its turning movement from the said raised position to the said lowered position, to move along the said axis (A) towards the interior of the said motor vehicle.

5. A device according to Claim 3 or Claim 4, **characterised in that** the said support means (8) include a support element (12) fixed peripherally to the said window (7) and movably attached to the said fixing means (10) by means of the said male and female screw assembly (9), the said screw (32) being fixed to the said fixing means (10) and the said nut (31) being fixed to the said support element (12).

6. A device according to Claim 5, **characterised in that** the said fixing means (10) include an elongate plate (18) fixed to the said box-like body (3) in correspondence with an upper opening (11) therein, and in a direction transverse to the said axis (A), the said screw (32) being carried on the said plate (18) and projecting from the plate (18) itself, the said support element (12) including at least one elongate arm (27) fixed to a side edge (15) of the said window (7), provided at one of its ends with the said nut (31) and which closes the said upper opening (11) in the said box-like body (3) when the said window (7) is in the said lowered position.

7. A device according to Claim 6, **characterised in that** the said drive means include an electric drive unit (40), and **in that** the said plate (18) has a bracket (46) for fixing the said electric drive unit (40).

## Patentansprüche

1. Fensterbetätigungsvorrichtung (1) für eine Seite (2) eines Motorfahrzeug, insbesondere für eine Seite eines Cabriolets, wobei die Seite (2) mindestens einen behälterartigen Körper (3) umfaßt, welcher einen Raum (6) zum Aufnehmen eines entsprechend zugeordneten Fensters (7) definiert, wobei die Vorrichtung (1) Haltemittel (8), welche an dem behälterartigen Körper (3) der Seite (2) befestigt sind, Mittel (9) für die Befestigung des Fensters (7) zur drehenden Bewegung mit den Haltemitteln (8), um dem Fenster (7) zu ermöglichen, sich im Gebrauch um eine Achse (A) quer zu der Seite (2) zwischen einer abgesenkten Stellung, in welcher das Fenster (7) vollständig innerhalb des Raums (6) in dem behälterartigen Körper (3) angeordnet ist, und einer angehobenen Stellung, in welcher das Fenster (7) nach oben von dem behälterartigen Körper (3) vorsteht, zu drehen, und Übersetzungsmittel (37, 38) umfaßt zum Bewirken der Translation des Fensters (7) längs der Achse (A) während der Drehung des Fensters (7) zwischen der abgesenkten und der angehobenen Stellung, **dadurch gekennzeichnet, daß** die Haltemittel (8) Befestigungsmittel (10) umfassen, welche fest an dem behälterartigen Körper (3) angebracht sind, und daß das Befestigungsmittel (9) und das Übersetzungsmittel (37, 38) eine männliche und weibliche Schraubenanordnung (9) umfassen, weiche zwischen dem Befestigungsmittel (10) und dem Fenster (7) zwischengeschaltet ist.

2. Vorrichtung nach Anspruch 1, **dadurch gekennzeichnet, daß** sie Antriebsmittel (40) umfaßt, welche mit den Befestigungsmitteln (31, 32) und dem Übersetzungsmittel (37, 38) zusammenwirken, um das Fenster (7) zwischen der angehobenen und der abgesenkten Stellung zu bewegen, und daß die Haltemittel (8), das Fenster (7), das Befestigungsmittel (9), das Übersetzungsmittel (37, 38) und das Antriebsmittel (40) eine Einheit definieren, welche vormontiert und an der Seite (2) montiert werden kann.

3. Vorrichtung nach Anspruch 1 oder 2, **dadurch gekennzeichnet, daß** die männliche und weibliche Schraubenanordnung (9) eine im Gebrauch zu der Achse (A) koaxiale Schraube (32) umfaßt und an einem der beiden Teile, umfassend das Fenster (7) und das Befestigungsmittel (10), angebracht ist, und eine Mutter (31), welche mit der Schraube (32) in Eingriff steht und durch das andere der beiden Teile, umfassend das Fenster (7) und das Befestigungsmittel (10), getragen ist.

4. Vorrichtung nach Anspruch 3, **dadurch gekennzeichnet, daß** die Schraube (32) und die Mutter (31) entsprechend zugeordnete Gewinde (38, 37) aufweisen, welche bezogen auf die Achse (A) in solch einer Weise geneigt sind, um zu bewirken, daß das Fenster, während seiner Drehbewegung von der angehobenen Stellung in die abgesenkte Stellung, sich längs der Achse (A) auf das Innere des Motorfahrzeugs hin zubewegt.

5. Vorrichtung nach Anspruch 3 oder Anspruch 4, **dadurch gekennzeichnet, daß** die Haltemittel (8) ein Halteelement (12) umfassen, welches peripher an dem Fenster (7) befestigt ist und beweglich an dem Befestigungsmittel (10) mittels der männlichen und weiblichen Schraubenanordnung (9) angebracht ist, wobei die Schraube (32) an dem Befestigungsmittel (10) befestigt ist und die Mutter (32) an dem Halteelement (12) befestigt ist.

6. Vorrichtung nach Anspruch 5, **dadurch gekennzeichnet, daß** das Befestigungsmittel (10) eine langgestreckte Platte (18) umfaßt, welche an dem behälterartigen Körper (3) in Übereinstimmung mit einer oberen Öffnung (11) in diesem und in einer Richtung schräg zu der Achse (A) befestigt ist, wobei die Schraube (32) an der Platte (18) getragen ist und von der Platte (18) selbst vorsteht, wobei das Halteelement (12) mindestens einen langgestreckten Arm (27) umfaßt, welcher an einer Seitenkante (15) des Fensters (7) befestigt ist, welcher an einem seiner Enden mit der Mutter (31) versehen ist und welcher die obere Öffnung (11) in dem behälterartigen Körper (3) schließt, wenn das Fenster (7) in der abgesenkten Stellung ist.

7. Vorrichtung nach Anspruch 6, **dadurch gekennzeichnet, daß** das Antriebsmittel eine elektrische Antriebseinheit (40) umfaßt und daß die Platte (18) eine Klammer (46) zum Befestigen der elektrischen Antriebseinheit (40) aufweist.

## Revendications

1. Dispositif de manoeuvre de fenêtre (1) pour un côté (2) d'un véhicule automobile, en particulier pour un côté d'un véhicule automobile décapotable, ledit côté (2) comprenant au moins un corps similaire à une boite (3) définissant un espace (6) pour loger une fenêtre associée (7), ledit dispositif (1) comprenant des moyens de support (8) fixés audit corps similaire à une boîte (3) dudit côté (2), des moyens (9) pour la fixation de ladite fenêtre (7) pour un mouvement de rotation avec lesdits moyens de support (8) afin de permettre à la fenêtre (7) de tourner, en utilisation, autour d'un axe (A) transversal audit côté (2) entre une position abaissée, dans laquelle ladite fenêtre (7) est située complètement à l'intérieur dudit espace (6) dans ledit corps similaire à une boîte (3), et une position relevée, dans laquelle ladite fenêtre (7) fait saillie vers le haut à partir dudit corps similaire à une boite (3), et des moyens de transmission (37, 38) pour provoquer la translation de ladite fenêtre (7) le long dudit axe (A) pendant la rotation de la fenêtre (7) entre lesdites positions abaissée et relevée, **caractérisé en ce que** lesdits moyens de support (8) comprennent des moyens de montage (10) fermement fixés audit corps similaire à une boîte (3), et **en ce que** lesdits moyens de fixation (9) et lesdits moyens de transmission (37, 38) comprennent un ensemble de vis mâle et de vis femelle (9) intercalé entre lesdits moyens de montage (10) et ladite fenêtre (7).

2. Dispositif selon la revendication 1, **caractérisé en ce qu'**il comprend des moyens de commande (40) coopérant avec les moyens de fixation (31, 32) et lesdits moyens de transmission (37, 38) afin de déplacer ladite fenêtre (7) entre lesdites positions abaissée et relevée, et **en ce que** lesdits moyens de support (8), ladite fenêtre (7), lesdits moyens de fixation (9), lesdits moyens de transmission (37, 38) et lesdits moyens de commande (40) définissent une unité qui peut être préassemblée et montée sur ledit côté (2).

3. Dispositif selon l'une des revendications 1 et 2, **caractérisé en ce que** ledit ensemble de vis mâle et de vis femelle (9) comprend une vis (32) coaxiale audit axe (A), en utilisation, et fixée à l'un de ladite fenêtre (7) et desdits moyens de montage (10), et un écrou (31) en prise avec ladite vis (32) et porté par l'autre de ladite fenêtre (7) et desdits moyens de montage (10).

4. Dispositif selon la revendication 3, **caractérisé en ce que** ladite vis (32) et ledit écrou (31) ont des filetages associés (38, 37) inclinés par rapport audit axe (A) de manière à faire déplacer la fenêtre, pendant son mouvement de rotation à partir de ladite position élevée vers ladite position abaissée, le long dudit axe (A) vers l'intérieur dudit véhicule automobile.

5. Dispositif selon la revendication 3 ou la revendication 4, **caractérisé en ce que** lesdits moyens de support (8) comprennent un élément de support (12) monté de manière périphérique à ladite fenêtre (7) et fixé de manière amovible auxdits moyens de montage (10) par ledit ensemble de vis mâle et de vis femelle (9), ladite vis (32) étant montée sur lesdits moyens de montage (10) et ledit écrou (31) étant monté sur ledit élément de support (12).

6. Dispositif selon la revendication 5, **caractérisé en ce que** lesdits moyens de montage (10) comprennent une plaque allongée (18) montée sur ledit corps similaire à une boîte (3) en correspondance avec une ouverture supérieure (11) à l'intérieur de celui-ci, et dans une direction transversale par rapport audit axe (A), ladite vis (32) étant portée sur ladite plaque (18) et faisant saillie à partir de la plaque (18) elle-même, ledit élément de support (12) comprenant au moins un bras allongé (27) monté sur un bord latéral (15) de ladite fenêtre (7), muni à l'une de ses extrémités dudit écrou (31) et qui ferme ladite ouverture supérieure (11) dans ledit corps similaire à une boite (3) lorsque ladite fenêtre (7) se trouve dans ladite position abaissée.

7. Dispositif selon la revendication 6, **caractérisé en ce que** lesdits moyens de commande comprennent une unité de commande électrique (40), et **en ce que** ladite plaque (18) possède un support (46) pour monter ladite unité de commande électrique (40).
